# EUROPEAN PATENT SPECIFICATION

(11) **EP 3 208 550 B1**
(45) Date of publication and mention of the grant of the patent: **07.04.2021**
(21) Application number: 15851773.0
(22) Date of filing: 05.08.2015
(51) Int. Cl.: F24F 13/20, F25B 1/00, F25B 13/00, F25B 49/02, F24F 11/74, F24F 11/89

(54) **AIR CONDITIONING APPARATUS**
KLIMAANLAGENVORRICHTUNG
APPAREIL DE CLIMATISATION

(30) Priority: 22.10.2014 JP 2014214996
(43) Date of publication of application: 23.08.2017
(73) Proprietor: Daikin Industries, Ltd., Osaka-shi, Osaka 530-8323 (JP)
(72) Inventor: HOSHIKA, Keitarou, Osaka-shi Osaka 530-8323 (JP); MAKINO, Tatsuya, Osaka-shi Osaka 530-8323 (JP); SUHARA, Ryouta, Osaka-shi Osaka 530-8323 (JP); NOUCHI, Yoshiteru, Osaka-shi Osaka 530-8323 (JP)
(74) Representative: Hoffmann Eitle
(86) International application number: PCT/JP2015/003942
(87) International publication number: WO 2016/063437

(56) References cited:
- WO-A1-2014/103028
- JP-A- H0 719 575
- JP-A- H0 719 575
- JP-A- 2009 041 832
- JP-A- 2009 041 832
- JP-A- 2011 099 613

## Description

### TECHNICAL FIELD

The present invention relates to an air conditioner.

### BACKGROUND ART

It is generally believed to be a good idea to reduce the number of times of starts and stops of the compressor in order to enhance the energy saving ability of an air conditioner (see, for example, Japanese Unexamined Patent Publication No. 2014-20687). An example described in Japanese Unexamined Patent Publication No. 2014-20687 attempts to reduce the number of times of starts and stops by appropriately adjusting the difference between a thermo-ON temperature and a thermo-OFF temperature. Further prior art can be found in WO 2014/103028 A1 and JP H07 19575 A. The document WO 2014/103028 A1 discloses an air conditioner with a controller that controls the number of revolutions of a compressor based on a constant target value.

### SUMMARY OF INVENTION

### TECHNICAL PROBLEM

According to the example described in Japanese Unexamined Patent Publication No. 2014-20687, however, the user could be given a so-called "cold draft (cold air feeling)" depending on the settings of the thermo-ON and thermo-OFF temperatures.

In view of the foregoing background, it is therefore an object of the present invention to allow an air conditioner to perform an energy saving mode of operation while keeping the user comfortable.

### SOLUTION TO THE PROBLEM

According to the present invention the above objective is solved by the features of claim 1.

According to this configuration, the controller (32) has a control mode in which the controller (32) controls the number of revolutions of the compressor (21) based on the lower limit (Tcs) that decreases as the volume of air decreases. Thus, the smaller the volume of the air is, the more significant the energy saving effect will be. In addition, selecting the lower limit (Tcs) of the condensation temperature (Tc) in this manner according to the volume of the air leads to a reduction in cold draft.

A second aspect is an embodiment of the first aspect. In the second aspect,
the indoor unit (12) blows the air in varying volumes by allowing an opening area of the air outlet (12b) to increase or decrease as the angle of the flap (12c) provided at the air outlet (12b) changes with the setting.

According to this configuration, the volume of the air blown varies according to the angle setting of the flap (12c). In addition, the lower limit (Tcs) of the condensation temperature (Tc) is selected based on the volume of the air at that time.

A third aspect is an embodiment of the first or second aspect. In the third aspect,
multiple different lower limits (Tcs) are provided for each single one of the settings, and
the controller (32) selects, in accordance with a given instruction, one of the multiple different lower limits (Tcs) that corresponds to the single setting.

According to this configuration, the lower limit (Tcs) is set in accordance with a given instruction (e.g., an instruction given by the user).

A fourth aspect is an embodiment of any one of the first to third aspects. In the fourth aspect,
the lower limit (Tcs) is able to be set during installation.

According to this configuration, the lower limit (Tcs) may be set based on the situation at the installation site or to the user's request.

### ADVANTAGES OF THE INVENTION

According to the first or second aspect, energy saving mode of operation can be performed with the user kept comfortable.

In addition, according to the third aspect, the lower limit (Tcs) can be set more appropriately, thus allowing for adjusting the degree of air conditioning (in a heating mode of operation) to the individual difference in cold draft feeling (i.e., the user's preference), for example.

Likewise, according to the fourth aspect, the lower limit (Tcs) can also be set more appropriately.

### BRIEF DESCRIPTION OF THE DRAWINGS

[FIG. 1] FIG. 1 is a piping diagram of an air conditioner according to a first embodiment of the present invention.
[FIG. 2] FIG. 2 is a perspective view of an indoor unit.
[FIG. 3] FIG. 3 is a vertical sectional view of the indoor unit.
[FIG. 4] FIG. 4 shows how the relationship between the volume of air blown and the lower limit of the condensation temperature changes with the operation mode according to the first embodiment.

### DESCRIPTION OF EMBODIMENTS

Embodiments of the present invention will now be described with reference to the accompanying drawings.

### <<First Embodiment of Invention>>

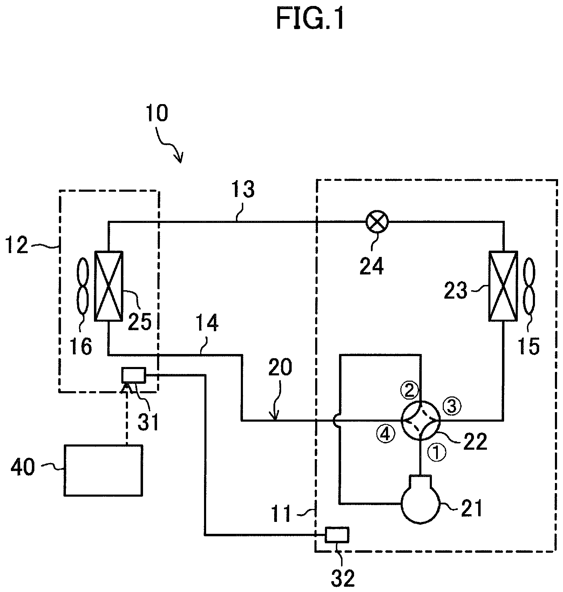

FIG. 1 is a piping diagram of an air conditioner (10) according to a first embodiment of the present invention. As shown in FIG. 1, the air conditioner (10) includes an outdoor unit (11), an indoor unit (12), an indoor controller (31), an outdoor controller (32), and a remote controller (40).

In this air conditioner (10), the outdoor unit (11) and the indoor unit (12) are connected together via a liquid-side communication pipe (13) and a gas-side communication pipe (14). The outdoor unit (11), the indoor unit (12), the liquid-side communication pipe (13), and the gas-side communication pipe (14) together form a refrigerant circuit (20).

### - Refrigerant Circuit (20) -

The refrigerant circuit (20) is a closed circuit filled with a refrigerant, and is comprised of a compressor (21), a four-way switching valve (22), an outdoor heat exchanger (23), an expansion valve (24), and an indoor heat exchanger (25).

Any of various compressors may be adopted as the compressor (21). For example, the compressor (21) may be a scroll compressor or a rotary compressor. The outdoor heat exchanger (23) and the indoor heat exchanger (25) are so-called "crossed-fin heat exchangers." The outdoor heat exchanger (23) exchanges heat between outdoor air and the refrigerant, while the indoor heat exchanger (25) exchanges heat between indoor air and the refrigerant. The expansion valve (24) is a so-called "electronic expansion valve."

The four-way switching valve (22) includes first to fourth ports. The four-way switching valve (22) is switchable between a first state in which the first port communicates with the third port and the second port communicates with the fourth port (a state indicated by the solid curves in FIG. 1) and a second state in which the first port communicates with the fourth port and the second port communicates with the third port (a state indicated by the broken curves in FIG. 1).

In the refrigerant circuit (20), the discharge port of the compressor (21) is connected to the first port of the four-way switching valve (22), and the suction port thereof is connected to the second port of the four-way switching valve (22). Also, in this refrigerant circuit (20), the outdoor heat exchanger (23), the expansion valve (24), and the indoor heat exchanger (25) are arranged in this order from the third port of the four-way switching valve (22) toward the fourth port thereof. This air conditioner (10) changes its operation mode from a cooling operation mode to a heating operation mode, or vice versa, by turning the four-way switching valve (22).

### - Outdoor Unit (11) -

The outdoor unit (11) houses the compressor (21), the four-way switching valve (22), the outdoor heat exchanger (23), and the expansion valve (24), The outdoor unit (11) also includes an outdoor fan (15) for supplying outdoor air to the outdoor heat exchanger (23).

### - Indoor Unit (12) -

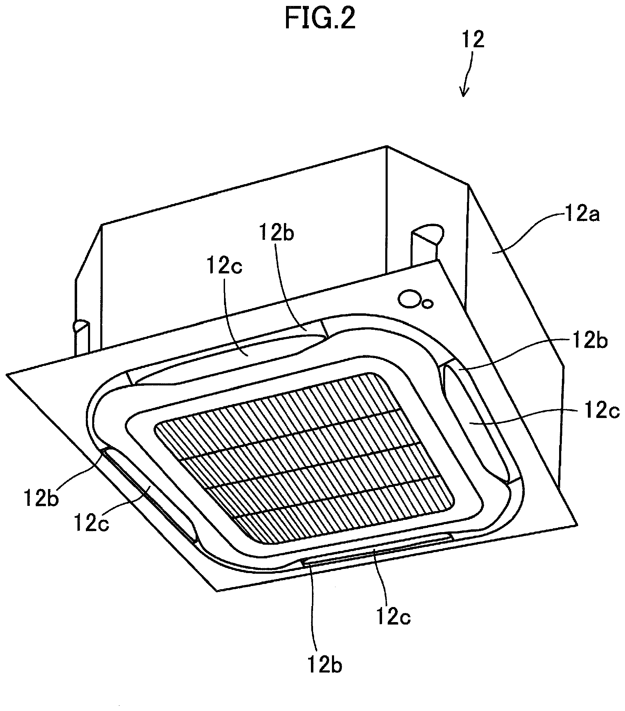

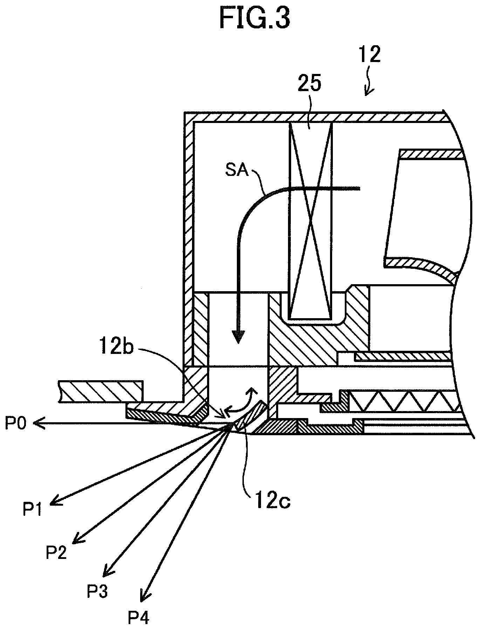

FIG. 2 is a perspective view of the indoor unit (12). FIG. 3 is a vertical sectional view of the indoor unit (12). The indoor unit (12) is installed in a room to be air-conditioned, and more specifically, mounted on the ceiling thereof. As shown in FIGS. 2 and 3, the indoor unit (12) includes a casing (12a), in which the indoor heat exchanger (25) and an indoor fan (16) are housed.

Also, the casing (12a) has a plurality of (e.g., four in this example) air outlets (12b), through which the air (SA) that has been air-conditioned by the indoor fan (16) blows. Each of these air outlets (12b) is provided with a flap (12c). Each of these flaps (12c) is used to adjust the blowing direction of the air (SA) blowing through an associated one of the air outlets (12b) into the room. As shown in FIG. 3, the angle of each flap (12c) is changeable in multiple stages between an angle corresponding to an airflow direction (P0) in which the air (SA) blows generally horizontally and an angle corresponding to an airflow direction (P4) in which the air (SA) blows most downwardly. The angle of the flap (12c) is controlled by the indoor controller (31) in accordance with the user's setting.

### - Remote Controller -

The remote controller (40) is used to transmit a control signal to the indoor unit (12). The control signal may be used to give the indoor unit (12) an instruction that the air conditioner (10) be started or stopped, an instruction that a temperature setting or an airflow direction setting (i.e., the orientation of the flap (12c)) be changed, or an instruction of switching the operation modes to be described later, for example. The control signal may be transmitted via either wired communication or wireless communication using an infrared ray or a radio wave.

### - Indoor Controller (31) -

The indoor controller (31) includes a microcomputer and a memory device that stores a program to operate the microcomputer. The indoor controller (31) is housed in the indoor unit (12), and controls the orientation of each of the flaps (12c), the indoor fan (16), and other parameters in accordance with the control signal received from the remote controller (40), and detection values of sensors (not shown) installed in the air conditioner (10). Examples of the sensors include a sensor for detecting the temperature of the air sucked into the indoor unit (12). Depending on the necessity, the indoor controller (31) stores the detection values of these sensors, the current position of each of the flaps (12c), the instruction (such as the temperature setting) transmitted from the remote controller (40), and other values in the memory device.

In controlling the indoor fan (16), the indoor controller (31) controls the volume of the air blown into the room at the highest air volume (H), the lowest air volume (L), or a medium air volume (M) between the highest air volume (H) and the lowest air volume (L). The air volume is sometimes controlled in accordance with the user's setting (which may be entered via the remote controller (40), for example) and sometimes controlled automatically by the indoor controller (31) according to the load imposed, which is the cooling or heating capability required. Specifically, the load may be detected based on the difference between the temperature setting entered via the remote controller (40) and the temperature of the air sucked into the indoor unit (12).

### - Outdoor Controller (32) -

The outdoor controller (32) includes a microcomputer and a memory device that stores a program to operate the microcomputer. The outdoor controller (32) is housed in the outdoor unit (11). The outdoor controller (32) is hardwired to the indoor controller (31), and exchanges signals (including the control signal described above and the detection values of the sensors in the indoor unit (12)) with the indoor controller (31). In addition, in accordance with the signal received from the indoor controller (31) and the detection values of the sensors (not shown) included in the air conditioner (10), the outdoor controller (32) controls the compressor (21), the four-way switching valve (22), the expansion valve (24), and the outdoor fan (15). The control by the outdoor controller (32) is characterized by the control of the number of revolutions of the compressor (21), in particular.

Generally speaking, air conditioners require a lot of power for startup. Thus, as for this air conditioner (10), reducing the number of times of starts and stops of the compressor (21) to operate the compressor (21) continuously at a low capability (i.e., at a small number of revolutions) matching the load on the compressor (21) during the heating mode of operation, for example, would also allow this air conditioner (10) to save the energy effectively. However, as the number of revolutions of the compressor (21) decreases during the heating mode of operation, the condensation temperature (Tc) of the refrigerant also decreases, thus lowering the temperature of the air (SA) blown by the indoor unit (12) as well. That is why simply decreasing the number of revolutions of the compressor (21) to save the energy might give so-called "cold draft (cold air feeling)" to the user.

Thus, the outdoor controller (32) keeps the condensation temperature (Tc) of the refrigerant equal to or higher than a predetermined lower limit (Tcs) during the heating mode of operation, thereby controlling the number of revolutions of the compressor (21) while providing solid comfort for the user. The lower limit (Tcs) of the condensation temperature (Tc) is a fixed value (of 42°C, for example) in a general air conditioner, but is variable in this embodiment according to the volume of the air (SA) blown into the room as will be described in detail later.

Also, the cold draft feeling varies from one person to another. Thus, this air conditioner (10) allows the user to select one of multiple operation modes as an operation mode for the heating operation. Specifically, this air conditioner (10) has an energy saving operation mode and a normal heating operation mode as operation modes for the heating operation. The energy saving operation mode is classified into the two modes of a standard energy saving mode and a lightly energy saving mode according to the degree of energy saving. Each of these operation modes has a different lower limit (Tcs) of the condensation temperature (Tc), and therefore, causes a different degree of decline in the number of revolutions of the compressor (21) (i.e., a different degree of energy saving) accordingly, from the other operation modes.

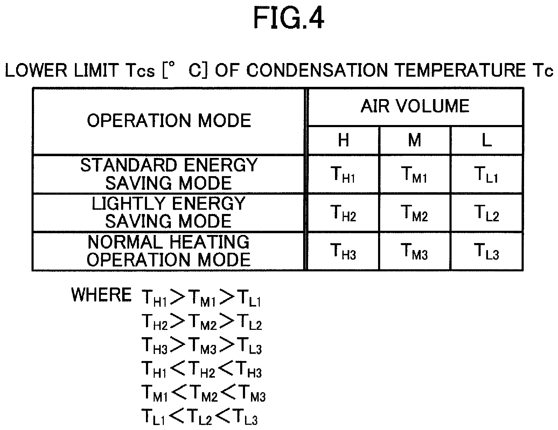

FIG. 4 shows how the relation between the volume of the air blown and the lower limit (Tcs) of the condensation temperature (Tc) varies in the first embodiment from one operation mode to another. As shown in FIG. 4, in any operation mode, the smaller the volume of the air (SA) blown into the room, the smaller the lower limit (Tcs) is set to be. That is to say, according to the table shown in FIG. 4, comparison between the lower limits (Tcs) of respective air volume settings reveals that the air volume settings satisfy the inequalities: T_{H1} > T_{M1} > T_{L1}, T_{H2} > T_{M2} > T_{L2}, and T_{H3} > T_{M3} > T_{L3}.

Also, comparing the lower limits (Tcs) of respective operation modes at the same air volume reveals that the lightly energy saving mode has a smaller lower limit (Tcs) than the normal heating operation mode and that the standard energy saving mode has a smaller lower limit (Tcs) than the lightly energy saving mode. That is to say, according to the table shown in FIG. 4, comparison between the lower limits (Tcs) of respective operation modes reveals that the operation modes satisfy the inequalities: T_{H1} < T_{H2} < T_{H3}, T_{M1} < T_{M2} < T_{M3}, and T_{L1} < T_{L2} < T_{L3}. As can be seen, this outdoor controller (32) provides multiple different lower limit values (Tcs) for a single air volume setting (H, M, L).

The table shown in FIG. 4 can also be compiled based on comfort index predicted mean votes (PMVs), for example, which may be calculated based on the volume of activity, amount of clothing, room temperature, radiation temperature, airflow, and relative humidity. The outdoor controller (32) stores the table shown in FIG. 4 in the memory device, and selects the lower limit value (Tcs) by detecting the air volume setting (H, M, L).

### <Air Conditioner's Operation>

For example, in response to the user's command to start a heating mode of operation that has been transmitted via the remote controller (40), the indoor controller (31) transmits various pieces of information about the temperature setting, the air volume setting (H, M, L), and the current operation mode (such as the lightly energy saving mode) to the outdoor controller (32). Based on these pieces of information transmitted from the indoor controller (31), the outdoor controller (32) controls the number of revolutions of the compressor (21) while keeping the condensation temperature (Tc) of the refrigerant equal to or higher than a predetermined lower limit (Tcs).

Specifically, first, the outdoor controller (32) not only switches the four-way switching valve (22) to the second state but also controls the degree of opening of the expansion valve (24) and starts the compressor (21).

Next, the outdoor controller (32) calculates the difference (hereinafter referred to as "ΔT") between the temperature setting (i.e., the temperature setting on the remote controller (40)) and the suction temperature of the indoor unit (12). This ΔT represents the current load. For example, if the number of revolutions of the compressor (21) matching the load is smaller than the current number of revolutions of the compressor (21), then the outdoor controller (32) will decrease the number of revolutions of the compressor (21) while keeping the condensation temperature (Tc) of the refrigerant equal to or greater than the lower limit (Tcs) using an algorithm such as PI control (proportional-plus-integral control), for example.

In this case, the outdoor controller (32) determines the lower limit (Tcs) of the condensation temperature (Tc) based on the air volume and the operation mode as shown in the table of FIG. 4. The air volume of the indoor unit (12) is sometimes set by the user via the remote controller (40), and sometimes automatically set by the indoor controller (31). The air volume setting (H, M, L) may be detected by the outdoor controller (32) via communication with the indoor controller (31).

In this example, the smaller the air volume setting is, the smaller the lower limit (Tcs) is set to be. Also, comparing the condensation temperatures (Tc) of respective operation modes at the same air volume setting reveals that the lightly energy saving mode has a lower condensation temperature (Tc) than the normal heating operation mode and that the standard energy saving mode has a lower condensation temperature (Tc) than the lightly energy saving mode. That is to say, the degree of energy saving is changed according to the user's preference.

### <Advantages of This Embodiment>

As can be seen from the foregoing description, the air conditioner (10) of this embodiment has a control mode in which the air conditioner (10) controls the number of revolutions of the compressor (21) by selecting and using a lower limit (Tcs) that decreases as the volume of air decreases. Thus, this air conditioner (10) can perform an energy saving mode of operation while providing solid comfort for the user.

Specifically, controlling the lower limit (Tcs) as described above allows for controlling the compressor (21) so as to reduce the number of times of starts and stops of the compressor (21) while keeping the user comfortable. In addition, the reduction in the number of times of starts and stops of the compressor (21) leads to a decreased variation in indoor temperature.

Furthermore, setting the lower limit (Tcs) of the condensation temperature (Tc) to be greater at a larger air volume than at a smaller air volume leads to a higher temperature of the air blown from the indoor unit (12) at the larger air volume than at the smaller air volume, thus decreasing the likelihood of giving cold draft to the user.

On top of that, this air conditioner (10) provides multiple different lower limits (Tcs) for a single setting (H, M, L) and allows the user to select one of those lower limits (Tcs). This allows the air conditioner (10) to perform air-conditioning (i.e., heating in this case) according to the individual difference in the cold draft feeling (i.e., according to the user's preference). That is to say, this air conditioner (10) can provide comfort for an even greater number of users.

### <<Second Embodiment of This Invention>>

An air conditioner (10) according to a second embodiment includes an outdoor controller (32) with a different configuration from the counterpart of the first embodiment. In this second embodiment, information about the settings (i.e., the airflow directions (P0-P4)) of the flaps (12c) is used to determine the lower limit (Tcs) of the condensation temperature (Tc).

The indoor unit (12) increases or decreases an opening area of an air outlet (12b) as the angle of a flap (12c) provided at the air outlet (12b) changes with the settings. In this example, when the flap (12c) is set in the airflow direction (P0) in which the air is blown most nearly horizontally, the opening area becomes the smallest. Then, the flow resistance increases at the air outlet (12b). That is why if the airflow direction is set to be P0, comparison between the multiple angle settings at the same air volume (H, M, L) of the indoor fan (16) reveals that the angle (or airflow direction) setting (P0) results in a smaller air volume than any other angle setting. Likewise, the opening area (i.e., the air volume) gradually increases in the order of the airflow directions (P1), (P2), and (P3). When the airflow direction of the flap (12c) is set to be the airflow direction (P4) in which the air is blown most nearly perpendicularly, the opening area becomes the largest, and the angle setting (P4) results in a larger air volume than any other angle setting. That is to say, as the angle of a flap (12c) provided at the air outlet (12b) changes with the settings, the opening area of the air outlet (12b) increases or decreases, thus varying the volume of the air (SA) blown from the indoor unit (12).

Thus, the outdoor controller (32) of this embodiment sets the lower limit (Tcs) to be a value that decreases as the air volume corresponding to the airflow direction setting decreases, and controls the number of revolutions of the compressor (21) while keeping the condensation temperature (Tc) of the refrigerant equal to or greater than the selected lower limit (Tc). Specifically, when the airflow direction is set to be the airflow direction (P0) (in which the air is blown almost horizontally), the lower limit (Tcs) becomes the smallest. After that, the lower limit (Tcs) gradually increases in the order of the airflow directions (P1), (P2), and (P3). When the airflow direction is set to be the airflow direction (P4), the lower limit (Tcs) becomes the largest.

In this embodiment, multiple different lower limits (Tcs) are also provided for each single setting (airflow direction setting). More specifically, lower limits (Tcs) are provided for respective airflow direction settings (P0-P4) on an operation mode basis. In this example, the operation modes also include an energy saving operation mode and a normal heating operation mode. The energy saving operation mode is also classified into the two modes of a standard energy saving mode and a lightly energy saving mode according to the degree of energy saving.

As can be seen from the foregoing description, according to this embodiment, the lower limit (Tcs) is varied according to the airflow direction setting (P0-P4), and the volume of the air (SA) blown from the indoor unit (12) increases or decreases depending on the airflow direction setting. That is to say, in this embodiment, the lower limit (Tcs) may also be considered varied substantially according to the air volume. Thus, this embodiment can also achieve the same advantages as the first embodiment.

### <<Other Embodiments>>

Optionally, the lower limit (Tcs) of the condensation temperature (Tc) may be set on the spot by the person who is installing the air conditioner (10). This may be done by separately providing an input device, or providing an input switch for the outdoor controller (32), for example, to allow the installer to enter the lower limit (Tcs) into the memory device of the outdoor controller (32). This allows the installer to set the lower limit (Tcs) of the condensation temperature (Tc) depending on the situation of the installation site and/or to the user's request. That is to say, comfort can be provided for an even larger number of users.

Furthermore, the indoor unit (12) does not have to be mounted on the ceiling as in the example described above. Alternatively, the indoor unit (12) may also be mounted on a wall surface or even put on the floor. If the indoor unit (12) is installed in a different manner, the relation between the orientation of the flap (12c) and the air volume may be different from the one described in the foregoing description of embodiments. However, if the control is performed based on the airflow direction setting (see the second embodiment described above), then the lower limit (Tcs) may be varied so as to decrease as the air volume decreases according to the airflow direction.

Optionally, the control of the first embodiment (i.e., the control based on the air volume setting (H, M, L) of the indoor fan (16)) and the control of the second embodiment (i.e., the control based on the airflow direction setting) may be used in combination. Specifically, in that case, a table showing correspondence between the lower limit (Tcs) and each individual combination of the air volume setting (H, M, L) and the airflow direction setting (P0-P4) may be compiled on an operation mode basis (e.g., for each of the standard energy saving mode and the lightly energy saving mode) and may be used to select the lower limit (Tcs).

### INDUSTRIAL APPLICABILITY

The present invention is useful as an air conditioner.

### DESCRIPTION OF REFERENCE CHARACTERS

- 10: Air Conditioner
- 12: Indoor Unit
- 12b: Air Outlet (Outlet)
- 12c: Flap
- 20: Refrigerant Circuit
- 21: Compressor
- 32: Outdoor Controller (Controller)

## Claims

1. An air conditioner comprising:
an indoor unit (12) comprising a casing (12a), in which an indoor heat exchanger (25) and an indoor fan (16) are housed, and an indoor controller (31), wherein
the indoor controller (31) is
configured to control the indoor fan (13) blowing air (SA) into a room in varying volumes according to an air volume setting of the indoor fan (16) and/or
configured to control a flap (12c) provided at an air outlet (12b) of the casing (12a) according to an airflow direction setting of said flap (12c) to vary the volumes of air blown into the room,
wherein the air volume setting comprises a highest air volume (H), a lowest air volume (L), and a medium air volume (M), between the highest air volume (H) and the lowest air volume (L);
a refrigerant circuit (20) including a compressor (21) and filled with a refrigerant;
a means for obtaining a condensation temperature (Tc) of the refrigerant, and
a controller (32) configured to control the number of revolutions of the compressor (21) while keeping the condensation temperature (Tc) of the refrigerant equal to or higher than a predetermined lower limit (Tcs) during a heating mode of operation, wherein
the controller (32) has a control mode in which the controller (32) is configured to control the number of revolutions of the compressor (21) based on the lower limit (Tcs) that decreases as a volume of air corresponding to one of the settings decreases during the heating mode of operation.

2. The air conditioner of claim 1, wherein
the indoor unit (12) blows the air in varying volumes by allowing an opening area of the air outlet (12b) to increase or decrease as the angle of the flap (12c) provided at the air outlet (12b) changes with the setting.

3. The air conditioner of claim 1 or 2, wherein
multiple different lower limits (Tcs) are provided for each single one of the settings, and
the controller (32) selects, in accordance with a given instruction, one of the multiple different lower limits (Tcs) that corresponds to the single setting.

4. The air conditioner of any one of claims 1-3, wherein
the lower limit (Tcs) is able to be set during installation.

## Patentansprüche

1. Klimaanlage, umfassend:
eine Innenraumeinheit (12), umfassend ein Gehäuse (12a), in welchem ein Innenraum-Wärmetauscher (25) und ein Innenraum-Gebläse (16) untergebracht sind, und eine Innenraum-Steuereinheit (31), wobei
die Innenraum-Steuereinheit (31):
konfiguriert ist, das Innenraum-Gebläse (13), welches Luft (SA) in variierenden Mengen in einen Raum bläst, gemäß einer Luftmengeneinstellung des Innenraum-Gebläses (16) zu steuern, und/oder
konfiguriert ist, um eine Klappe (12c), welche an einem Luftauslass (12b) des Gehäuses (12a) bereitgestellt ist, gemäß einer Luftströmungsrichtungseinstellung der Klappe (12c) zu steuern, um die in den Raum geblasenen Mengen Luft zu variieren,
wobei die Luftmengeneinstellung eine höchste Luftmenge (H), eine niedrigste Luftmenge (L) und eine mittlere Luftmenge (M) zwischen der höchsten Luftmenge (H) und der niedrigsten Luftmenge (L) umfasst;
einen Kältemittelkreislauf (20), welcher einen Kompressor (21) beinhaltet und mit einem Kältemittel gefüllt ist;
ein Mittel zum Erhalten einer Kondensationstemperatur (Tc) des Kältemittels, und
eine Steuereinheit (32), welche konfiguriert ist, um die Anzahl von Umdrehungen des Kompressors (21) während des Haltens der Kondensationstemperatur (Tc) des Kältemittels gleich einem oder höher als ein vorbestimmtes unteres Limit (Tcs) während eines Heizbetriebsmodus zu steuern, wobei
die Steuereinheit (32) einen Steuermodus aufweist, in welchem die Steuereinheit (32) konfiguriert ist, um die Anzahl von Umdrehungen des Kompressors (21) auf Basis des unteren Limits (Tcs) zu steuern, welches abnimmt, wenn eine einer der Einstellungen entsprechende Menge Luft während des Heizbetriebsmodus abnimmt.

2. Klimaanlage nach Anspruch 1, wobei
die Innenraumeinheit (12) die Luft in variierenden Mengen bläst, indem sie einem Öffnungsbereich des Luftauslasses (12b) erlaubt, sich zu vergrößern oder zu verkleinern, wenn sich der Winkel der Klappe (12c), welche an dem Luftauslass (12b) bereitgestellt ist, gemäß der Einstellung ändert.

3. Klimaanlage nach Anspruch 1 oder 2, wobei
mehrere unterschiedliche untere Limits (Tcs) für jede einzelne der Einstellungen bereitgestellt sind; und
die Steuereinheit (32) in Übereinstimmung mit einer vorgegebenen Anweisung eines der mehreren unterschiedlichen unteren Limits (Tcs) auswählt, welches der einzelnen Einstellung entspricht.

4. Klimaanlage nach einem der Ansprüche 1-3, wobei
das untere Limit (Tcs) während der Installation festgelegt werden kann.

## Revendications

1. Climatiseur comprenant:
une unité intérieure (12) comprenant un boîtier (12a), dans lequel un échangeur de chaleur intérieur (25) et un ventilateur intérieur (16) sont logés, et un dispositif de commande intérieur (31), dans lequel
le dispositif de commande intérieur (31) est
configuré pour commander le ventilateur intérieur (13) soufflant de l'air (SA) dans une pièce dans des volumes variables en fonction d'un réglage de volume d'air du ventilateur intérieur (16) et/ou
configuré pour commander un volet (12c) prévu au niveau d'une sortie d'air (12b) du boîtier (12a) en fonction d'un réglage de direction de flux d'air dudit volet (12c) pour faire varier les volumes d'air soufflés dans la pièce,
dans lequel le réglage de volume d'air comprend un volume d'air maximal (H), un volume d'air minimal (L) et un volume d'air moyen (M) entre le volume d'air maximal (H) et le volume d'air minimal (L) ;
un circuit de réfrigérant (20) incluant un compresseur (21) et rempli d'un réfrigérant ;
un moyen pour obtenir une température de condensation (Tc) du réfrigérant, et
un dispositif de commande (32) configuré pour commander le nombre de tours du compresseur (21) tout en maintenant la température de condensation (Tc) du réfrigérant supérieure ou égale à une limite inférieure prédéterminée (Tcs) pendant un mode de fonctionnement de chauffage, dans lequel
le dispositif de commande (32) présente un mode de commande dans lequel le dispositif de commande (32) est configuré pour commander le nombre de tours du compresseur (21) sur la base d'une limite inférieure (Tcs) qui diminue à mesure qu'un volume d'air correspondant à l'un des réglages diminue pendant le mode de fonctionnement de chauffage.

2. Climatiseur selon la revendication 1, dans lequel
l'unité intérieure (12) souffle de l'air dans des volumes variables en permettant à une zone d'ouverture de la sortie d'air (12b) d'augmenter ou de diminuer lorsque l'angle du volet (12c) prévu au niveau de la sortie d'air (12b) change avec le réglage.

3. Climatiseur selon la revendication 1 ou 2, dans lequel
de multiples limites inférieures (Tcs) différentes sont prévues pour chacun unique des réglages, et
le dispositif de commande (32) sélectionne, en fonction d'une instruction donnée, l'une des multiples limites inférieures (Tcs) différentes qui correspond au réglage unique.

4. Climatiseur selon l'une quelconque des revendications 1-3, dans lequel
la limite inférieure (Tcs) peut être réglée pendant l'installation.
